# EUROPÄISCHE PATENTSCHRIFT

(11) **EP 2 313 351 B1**
(45) Veröffentlichungstag und Bekanntmachung des Hinweises auf die Patenterteilung: **23.03.2016**
(21) Anmeldenummer: 09779569.4
(22) Anmeldetag: 28.05.2009
(51) Int. Cl.: C04B 24/02, C04B 28/02, C04B 24/32

(54) **PULVERFÖRMIGE BAUSTOFFZUSAMMENSETZUNGEN ENTHALTEND LANGKETTIGE DIALKYLETHER**
PULVERULENT BUILDING MATERIAL COMPOSITIONS CONTAINING LONG-CHAIN DIALKYL ETHERS
COMPOSITIONS DE MATÉRIAU DE CONSTRUCTION EN POUDRE CONTENANT DU DIALKYLE ÉTHER À CHAÎNE LONGUE

(30) Priorität: 14.08.2008 EP 08162368
(43) Veröffentlichungstag der Anmeldung: 27.04.2011
(73) Patentinhaber: Construction Research & Technology GmbH, 83308 Trostberg (DE)
(72) Erfinder: HOETZL, Klaus, 86199 Augsburg (DE); DÜRNDORFER, Silvia, 86368 Gersthofen (DE); SCHWARZ, Volker, 86179 Augsburg (DE); STOHR, Werner, 86161 Augsburg (DE); STREICHER, Markus, 86316 Friedberg (DE); EHLE, Alexander, 86916 Kaufering (DE); KRATZER, Kornelia, 86637 Wertingen (DE)
(86) Internationale Anmeldenummer: PCT/EP2009/056513
(87) Internationale Veröffentlichungsnummer: WO 2010/018017

(56) Entgegenhaltungen:
- EP-A1- 0 824 093
- DE-T2- 69 405 941
- DE-U1-202006 016 797
- JP-A- 3 223 139
- JP-A- 6 087 643
- DATABASE WPI Week 197638 Thomson Scientific, London, GB; AN 1976-70501X XP002565960 & BE 841 226 A (WET TALC AB) 16. August 1976 (1976-08-16)

## Beschreibung

Gegenstand der vorliegenden Erfindung sind pulverförmige Baustoffzusammensetzungen enthaltend Dialkylether, Verfahren zur Herstellung derartiger Produkte sowie deren Verwendung.

Insbesondere trockene, pulverförmige Baustoffzusammensetzungen, wie hydraulisch abbindende Massen auf Basis von Zement, Puzzolan oder Kalk und nicht hydraulische abbindende Massen auf Basis von Gips und Luftkalk (z. B. Fliesenkleber, Fugenfüller, Spachtelmassen, Dichtschlämmen, Putze, Estriche usw.) neigen besonders bei Umfüll- und Mischprozessen zu einer deutlichen Staubbildung. Es wurden deshalb zahlreiche Versuche unternommen, um die Staubentwicklung in solchen Produkten zu vermeiden bzw. vollständig zu unterbinden.

So wurde bspw. versucht, die Staubentwicklung bei hydraulisch abbindenden Massen über den Mahlgrad bzw. die Kornzusammensetzung der pulverförmigen Produkte zu verringern, wobei jedoch die Verarbeitbarkeit gröberer Pulver deutlich schlechter ist.

Eine weitere bekannte Methode ist die Aggregation der feinteiligen Partikel z. B. mit Hilfe von Wasser, wässrigen Lösungen oder Dispersionen. So ist bspw. aus der US 4,780,143 bekannt, Klinker vor der Vermahlung zu Zement zur Verringerung der Staubentwicklung mit wässrigem Schaum zu versetzen. Auch wurden Versuche unternommen, Zementen für Spritzbetonzusammensetzungen Kunststoffdispersionen zuzusetzen, um so die Staubbildung zu erniedrigen. Eine derartige Aggregation ist allerdings dann nachteilig, wenn die so entstaubten hydraulisch abbindenden Massen nachträglich nicht mehr vermahlen werden. In feinpulvrigen Spachtelmassen sind gröbere Aggregationen nämlich nicht akzeptabel, da sie sich auf glatten Oberflächen deutlich abzeichnen.

Auch bekannt ist die Verwendung von so genannten Staubminderungsmitteln, die dem Anmachwasser von Zement zugesetzt werden, um das Stauben beim Aufbringen von Spritzbeton oder Spritzmörtel zu vermindern. Zu diesem Zweck werden insbesondere Polyethylenglykole oder Ethylenoxid/Propylenoxid-Blockcopolymere als Staubbindemittel bzw. Additive zur Verminderung der Staubbildung eingesetzt. Derartige Additive beeinflussen allerdings vielfach das Verarbeitungsverhalten negativ, da sie insbesondere zu einer Abbindeverzögerung oder einer ausgeprägten Hygroskopie der bauchemischen Produkte führen. Verwendet man alternativ hydrophobe Additive, zu denen ebenfalls Ethylenoxid/Propylenoxid-Blockcopolymere gehören, ergeben sich vor allem bei pulverförmigen bauchemischen Produkten Benetzungsschwierigkeiten.

Aus der WO 2006/084588 A1 ist die Verwendung von aliphatischen Kohlenwasserstoffen und Kohlenwasserstoffgemischen als Additive zur Verminderung des Staubens trockener und insbesondere pulverförmiger bauchemischer Produkte wie Fliesenkleber, Fugenfüller, Spachtelmassen, Dichtschlämmen usw. bekannt. Beschrieben werden insbesondere Kohlenwasserstoffe, die unter Normalbedingungen flüssig sind, wobei aliphatische Kohlenwasserstoffe, insbesondere in linearer oder verzweigter, gesättigter oder ungesättigter Form, mit Siedepunkten von 100 bis 400°C besonders erwähnt werden.

Das Gebrauchsmuster DE 20 2006 016 797 U1 betrifft einen staubarmen Trockenmörtel, welcher mindestens eine staubmindernde Komponente in einer Menge von 0,01 bis 10 Gew.-%, bezogen auf die Gesamttrockenmischung, enthält. Die staubmindernde Komponente wird hierbei ausgewählt aus der Reihe der Monoalkohole, wie z. B. 3-Methoxybutanol, Benzylalkohol, 1,2-Propandiol, Hexanol, Diacetonalkohol, Ethyldiglykol, Isopropanol, 2-Ethylhexanol und/oder Alkandiole wie 2-Methylpentan-2,4-diol, Neopentylglykol und n-Butan-2,5-diol. Weiterhin geeignet sind gemäß dieser Publikation Glykole, Polyethylenglykole, Fettalkohole und Polyphenylalkohole. Weiterhin werden aliphatische Ether, Zelluloseether, Alkoxylate und Methyl-/Ethyl-Fettsäureether erwähnt.

Mit den bekannten Maßnahmen nach dem Stand der Technik konnte das grundlegende Problem des Staubens pulverförmiger Baustoffzusammensetzungen nach wie vor nicht, vor allem unter wirtschaftlichen Gesichtspunkten, zufrieden stellend gelöst werden.

Der vorliegenden Erfindung lag deshalb die Aufgabe zugrunde, pulverförmige Baustoffzusammensetzungen zur Verfügung zu stellen, welche eine deutlich verminderte Staubneigung aufweisen. Die hierzu verwendeten Additive sollten sich durch eine einfache Applizierbarkeit bei gleichzeitig hoher Wirksamkeit auszeichnen. Außerdem sollten sie bei der Anwendung nicht zur Klumpenbildung neigen und auch das geforderte Eigenschaftsprofil der Produkte, insbesondere die Kratzfestigkeit, Druckfestigkeit und Haftzugfestigkeiten, nicht negativ beeinflussen.

Gelöst wurde diese Aufgabe durch die Bereitstellung einer pulverförmigen Baustoffzusammensetzung, enthaltend mindestens einen Dialkylether mit 8 bis 50 Kohlenstoffatomen.

Abgesehen davon, dass die Aufgabenstellung in Bezug auf sämtliche Vorgaben vollständig erfüllt werden konnte, hat sich überraschenderweise herausgestellt, dass die erfindungsgemäßen Dialkylether eine anhaltend hohe Wirksamkeit über längere Zeit aufweisen.

Besonders geeignet im Rahmen der vorliegenden Erfindung sind Dialkylether oder deren Gemische mit 12 bis 30, besonders bevorzugt 16 bis 24 Kohlenstoffatome, wobei es sich bei den Alkylresten des Dialkylethers um lineare und/oder verzweigte und/oder cyclische, vorzugsweise lineare, gesättigte und/oder ungesättigte, vorzugsweise gesättigte Reste handelt. In einer besonders bevorzugten Ausführungsform handelt es sich bei den eingesetzten Dialkylethern um Dibutylether, Dipentylether, Dihexylether, Diheptylether, Dioctylether, Dinonylether, Didecylether, Diundecylether und/oder Didodecylether.

Als besonders vorteilhaft hat es sich erwiesen, wenn erfindungsgemäß die jeweils eingesetzten Dialkylether in flüssiger Form verwendet werden. Der Vorteil dieser Variante ist darin zu sehen, dass sich flüssige Anwendungsformen besser auf die zu entstaubende, pulverförmige Baustoffzusammensetzung aufbringen lassen und dass der Auftrag insgesamt im Vergleich zu festen Varianten homogener erfolgt. Außerdem werden im Falle flüssiger Dialkylether geringere Mengen benötigt. Selbstverständlich sind auch die Adhäsion bzw. die Anfangshaftung flüssiger Additive im Vergleich zu festen Varianten verbessert. Die Dialkylether besitzen hierbei bevorzugt eine kinematische Viskosität bei 20°C von 0,1 bis 30 mm²/s, insbesondere 5 bis 20 mm²/s.

Die pulverförmigen Baustoffzusammensetzungen, enthaltend mindestens einen Dialkylether mit 8 bis 50 Kohlenstoffatomen, sollen im Rahmen der vorliegenden Erfindung vorzugsweise in trockener Form vorliegen, wobei hierunter zu verstehen ist, dass diese einen Wassergehalt nach Karl-Fischer von weniger als 5 Gew.-%, vorzugsweise weniger als 1 Gew.-% und besonders bevorzugt von weniger als 0,1 Gew.-% aufweisen.

Die durchschnittliche Partikelgröße in den jeweiligen pulverförmigen Baustoffzusammensetzungen sollte vorzugsweise von 0,01 bis 5 mm reichen. Als besonders vorteilhaft hat es sich erwiesen, wenn die pulverförmigen Baustoffzusammensetzungen einen durch Laserdiffraktometrie bestimmten Korngrößenanteil von mindestens 2 Gew.% ≤ 68 µm und mindestens 10 Gew.% ≤ 200 µm aufweisen. Besonders bei den sehr feinteiligen Varianten kommt das Entstaubungspotenzial der erfindungsgemäß verwendeten Dialkylether besonders deutlich zum Tragen.

Grundsätzlich lassen sich mit den erfindungsgemäß verwendeten Dialkylethern beliebige pulverförmige Baustoffzusammensetzungen signifikant entstauben. Stellvertretend für die Baustoffzusammensetzungen sollen insbesondere hydraulisch abbindende Zement-basierte und nicht hydraulisch abbindende Gips-basierte Massen, so genannte Werktrockenmörtel genannt sein, bei denen feingemahlene mineralische Stoffe unter Wasseraufnahme an Luft oder unter Wasser steinartig erhärten und nach ihrem Aushärten funktionsfähig sind. Derartige Werktrockenmörtel kommen nämlich im Allgemeinen als feine Pulver in den Handel, welche dann in der endgültigen Abmischung an der Baustelle mit dem Anmachwasser angesetzt werden. Beim Umfüllen bzw. Entleeren der Transportgebinde kommt es dann zu der nachteiligen starken Staubentwicklung, welche durch den Einsatz der nun vorgeschlagenen Dialkylether deutlich reduziert oder vollständig unterbunden werden kann.

Als besonders vorteilhaft hat sich die erfindungsgemäße Verwendung dann erwiesen, wenn es sich bei dem Werktrockenmörtel um Fliesenkleber, Fugenfüller, Spachtelmassen, Dichtschlämmen, Reparaturmörtel, Ausgleichsmörtel, Armierungskleber, Kleber für Wärmedämmverbundsysteme (WDVS), mineralische Putze, Feinspachtel und Estrichsysteme handelt.

Auch geeignet für die erfindungsgemäß verwendeten Additive sind pulverförmige Polymere und insbesondere redispergierbare Polymerpulver oder Fliesenkleber, welche die pulverförmigen Baustoffzusammensetzungen darstellen oder welche als deren pulverförmige Bestandteile vorliegen. Die genannten redispergierbaren Polymerpulver sind vorzugsweise aus mindestens einem Vertreter der Reihe Vinylacetat, Styrol, Butadien, Ethylen, Versatinsäure-Vinylester, Harnstoff-Formaldehyd-Kondensationsprodukte und Melamin-Formaldehyd-Kondensationsprodukte aufgebaut.

Um das Entstauben oder die Staubminderung im gewünschten vorteilhaften Ausmaß auch tatsächlich zu erreichen, empfiehlt es sich, die Dialkylether der bevorzugt trockenen, pulverförmigen Baustoffzusammensetzungen in einer Menge von 0,01 bis 8 Gew.-%, vorzugsweise von 0,3 bis 5 Gew.-% und besonders bevorzugt von 0,5 bis 2,5 Gew.-% zuzusetzen.

Selbstverständlich können die jeweils zu entstaubenden pulverförmigen Baustoffzusammensetzungen, denen die Additive erfindungsgemäß zugesetzt werden, neben den genannten feinteiligen Partikeln zusätzlich mindestens einen Vertreter der Reihe Bindemittel, Füllstoffe, Verdicker, Wasserretentionsmittel, Dispergiermittel, Rheologieverbesserer, Entschäumer, Verzögerer, Beschleuniger, Zusatzstoffe, Pigmente, organische oder anorganische Fasern enthalten.

In einer bevorzugten Ausführungsform umfasst die pulverförmige Baustoffzusammensetzung 15 bis 75 Gew.-% Füllstoffe wie Quarzsand, Kalksteinmehl, Schwerspat und/oder Schiefermehl, 1 bis 5 Gew.-% Dispersionspulver, 0,1 bis 5 Gew.-% Wasserretentionsmittel wie Celluloseether und/oder SISA (Salt Insensitive Superabsorbents), 0,1 bis 3 Gew.-% Verdicker wie Stärkeether und/oder Polyacrylamid, 0,1 bis 3 Gew.-% Zementbeschleuniger wie Calciumformiat und 0,1 bis 3 Gew.-% Zementverzögerer wie Citrat.

Grundsätzlich wird empfohlen, dass die pulverförmigen Baustoffzusammensetzungen, die im Rahmen der vorliegenden Erfindung entstaubt werden sollen, einen Anteil an Bindemittel im Bereich von 5 bis 80 Gew.-%, vorzugsweise von 10 bis 70 Gew.-% und besonders bevorzugt von 15 bis 50 Gew.-% aufweisen.

Die erfindungsgemäß eingesetzten Dialkylether sind dabei im allgemeinen oxidationsstabil und gehen insbesondere unter Luftsauerstoff keine chemischen Reaktionen ein, so dass ihre Entstaubungseigenschaften in Bezug auf die pulverförmigen Baustoffzusammensetzungen auch über einen langen Lagerungszeitraum zumindest im wesentlichen unverändert erhalten bleiben.

Erfindungsgemäß bevorzugt ist es, wenn die als Entstaubungsadditive eingesetzten Dialkylether bei einer Temperatur von 107 °C einen Verdampfungsverlust über 24 Stunden von weniger als 5 Gew.-%, vorzugsweise von weniger als 2 Gew.-%, besonders bevorzugt von weniger als 1 Gew.-%, bezogen auf die eingesetzten Dialkylether, aufweisen. Auf diese Weise wird gewährleistet, dass einerseits eine Langzeitentstaubung in Bezug auf die erfindungsgemäß behandelten pulverförmigen Baustoffzusammensetzungen erreicht wird und andererseits die erfindungsgemäß behandelten Produkte zumindest im wesentlichen geruchsfrei bzw. geruchsarm sind, da keine Dialkylether in nennenswerten Mengen freigesetzt werden.

Ein weiterer Aspekt der vorliegenden Erfindung ist die Verwendung mindestens eines Dialkylethers mit 8 bis 50 Kohlenstoffatomen als Additiv in pulverförmigen Baustoffzusammensetzungen zur Verminderung des Staubens.

Die vorliegende Erfindung umfasst weiterhin ein Verfahren zur Herstellung insbesondere trockener, pulverförmiger Baustoffzusammensetzungen mit einem reduzierten Staubbildungs- und Staubungsverhalten. Dieses Verfahren ist erfindungsgemäß dadurch gekennzeichnet, dass man die pulverförmigen Baustoffzusammensetzungen mit mindestens einem Dialkylether als Entstaubungsmittel in Kontakt bringt, was insbesondere durch Aufsprühen erfolgen kann. Die hierbei verwendeten Dialkylether weisen die bereits genannten Eigenschaften auf.

Im Allgemeinen erfolgt die bereits mehrfach erwähnte Beaufschlagung bzw. das in Kontakt bringen durch Aufsprühen oder Bedüsen der jeweils gewählten Entstaubungs- oder Staubminderungsadditive auf die pulverförmigen Baustoffzusammensetzungen. Auf diese Weise kann der homogene Auftrag in einfacher Weise bei gleichzeitig guter Haftung und Anfangsadhäsion gewährleistet werden. Selbstverständlich kann das in Kontakt bringen der pulverförmigen Baustoffzusammensetzungen mit dem jeweiligen Additiv auch auf jede andere geeignete Art und Weise erfolgen, wie sie dem Fachmann geläufig sind. In Frage kommen hier insbesondere auch das Abmischen bzw. Unterrühren der flüssigen Additive, wobei jedoch der Sprühauftrag eindeutig zu bevorzugen ist, da dies die einfachste und wirtschaftlich attraktivste Auftragungsvariante darstellt.

Die im Rahmen der erfindungsgemäßen Verwendung eingesetzten Dialkylether können in ihrer Staubminderungs- bzw. Entstaubungswirkung natürlich auch durch sämtliche andere geeignete Additive unterstützt werden. Auch wenn die vorgeschlagenen Dialkylether in den überwiegenden Anwendungsfällen vollkommen ausreichend sind, um das Staubungsverhalten pulverförmiger Baustoffzusammensetzungen zu reduzieren bzw. vollständig zu unterbinden, so kann es in Spezialfällen durchaus sinnvoll sein, die vorteilhafte Wirkung dieser Additive durch andere Zusatzmittel zu unterstützen, welche ihrerseits ebenfalls mindernd auf das Staubungsverhalten wirken.

Insgesamt werden mit den vorgeschlagenen Dialkylethern mit 8 bis 50 Kohlenstoffatomen Additive zur Verfügung gestellt, mit denen pulverförmige Baustoffzusammensetzungen auf einfache und wirtschaftliche Art und Weise homogen und stabil entstaubt werden können, so dass vor allem unter den Gesichtspunkten der Arbeitssicherheit, insbesondere beim Umfüll- und Verarbeitungsvorgang, ein deutlicher Fortschritt festzustellen ist. Weiterhin wird das geforderte Eigenschaftsprofil der Baustoffzusammensetzungen, insbesondere die Kratzfestigkeit, Druckfestigkeit und Haftzugfestigkeiten, im Vergleich zum Stand der Technik, durch die erfindungsgemäßen Additive nicht negativ beeinflusst.

Die nachfolgenden Beispiele verdeutlichen die Vorteile der vorliegenden Erfindung.

### Beispiele

### Trockenmörtelmischungen

### Fliesenkleber 1

| | |
|---|---|
| Portlandzement CEM I | 25,0 Gew.-% |
| Quarzsand 0,1-0,5 mm | 50,0 Gew.-% |
| Hüttensandmehl | 14,3 Gew.-% |
| Kalksteinmehl < 0,1 mm | 6,3 Gew.-% |
| Celluloseether | 0,9 Gew.-% |
| Dispersionspulver (Elotex AP 200) | 3,0 Gew.-% |
| Erhärtungsbeschleuniger (Kalziumformiat) | 0,5 Gew.-% |

### Fliesenkleber 2

| | |
|---|---|
| Portlandzement CEM I | 33,5 Gew.-% |
| Quarzsand 0,1-0,5 mm | 56,0 Gew.-% |
| Leichtfüllstoff Perlite < 0,5 mm | 5,0 Gew.-% |
| Celluloseether | 1,0 Gew.-% |
| Cellulosefaser (Arbocel) | 1,0 Gew.-% |
| Dispersionspulver (Elotex AP 200) | 3,0 Gew.-% |
| Erhärtungsbeschleuniger (Kalziumformiat) | 0,5 Gew.-% |

### Fugenmörtel

| | |
|---|---|
| Portlandzement CEM I | 36,5 Gew.-% |
| Quarzsand 0,1-0,2 mm | 51,8 Gew.-% |
| Kalksteinmehl < 0,1 mm | 8,0 Gew.-% |
| Celluloseether | 2,2 Gew.-% |
| Dispersionspulver (Vinnapas 7031 H) | 1,0 Gew.-% |
| Erhärtungsbeschleuniger (Kalziumformiat) | 0,5 Gew.-% |

### Selbstverlaufende Spachtelmasse

| | |
|---|---|
| Portlandzement CEM III | 6,5 Gew.-% |
| Tonerdezement | 12,0 Gew.-% |
| Quarzsand 0,03-0,1 mm | 32,5 Gew.-% |
| Kalksteinmehl < 0,1 mm | 42,3 Gew.-% |
| Verlaufsmittel (Mement F 10) | 0,1 Gew.-% |
| Gips | 5,0 Gew.-% |
| Dispersionspulver (Vinnapas 4010 L) | 1,0 Gew.-% |
| Entschäumer (Agitan P) | 0,1 Gew.-% |
| Erhärtungsbeschleuniger (Kalziumformiat) | 0,5 Gew.-% |

### Meßmethode

Die Messungen wurden in Anlehnung an DIN 55999-2 "Bestimmung einer Maßzahl für die Staubentwicklung von Pigmenten und Füllstoffen -Teil 2: Fallmethode" durchgeführt.
Zur Messung wurde das "Staubmessgerät SP3" der LORENZ MESSGERÄTEBAU GmbH & Co. KG verwendet.

### Probenherstellung

Der jeweiligen Trockenmörtelmischungen wurden in ein Mischgefäß vorgelegt. Das erfindungsgemäße Entstaubungsadditiv wurde im angegebenen Mengenverhältnis auf die Trockenmörtelmischung mittels Drucksprüher ("Blumenspritze") aufgebracht und mit dem Mörtel vermischt.

### Ergebnisse

| | Staubzahl nach 0d | Staubzahl nach 28d |
|---|---|---|
| Fliesenkleber 1 (Vergleich) | 150 | 250 |
| Fliesenkleber 1 +2% Siliconöl (Vergleich) | 15 | 25 |
| Fliesenkleber 1 +1,5 % Dioctylether (Erfindung) | 10 | 20 |

| | Staubzahl nach 0d | Staubzahl nach 28d |
|---|---|---|
| Fliesenkleber 2 (Vergleich) | 150 | 250 |
| Fliesenkleber 2 +3% PEG 400 (Vergleich) | 25 | 55 |
| Fliesenkleber 2 +1,5% Dioctylether (Erfindung) | 10 | 25 |

PEG 400: Polyethylenglykol mit mittlerer Molmasse von 400

| | Staubzahl nach 0d | Staubzahl nach 28d |
|---|---|---|
| Fugenmörtel (Vergleich) | 100 | 150 |
| Fugenmörtel +3% PEG 400 (Vergleich) | 30 | 50 |
| Fugenmörtel +1,5% Dioctylether (Erfindung) | 25 | 45 |

PEG 400: Polyethylenglykol mit mittlerer Molmasse von 400

Die Fugenmörtel wurden mit Wasser angerührt und in ca. 5 mm Breite Fugen eingebracht. Die Fugen wurden dabei wie folgt erstellt: Auf eine Gipskartonplatte wurden mit einem herkömmlichen Fliesenkleber Steingutfliesen (10X10cm) verlegt und 28 d getrocknet.
Die Beurteilung der Oberflächenbeschaffenheit erfolgte subjektiv 24 h nach Einbringen des Fugenmörtels.
Die Kratzfestigkeit wurde ebenfalls nach 24 h subjektiv mittels eines Kratzspatels beurteilt.

| | Oberflächenbeschaffenheit | Kratzfestigkeit |
|---|---|---|
| Fugenmörtel (Vergleich) | Gut, gleichmäßig | gut |
| Fugenmörtel +3% PEG 400 (Vergleich) | Fleckig, ungleichmäßig mit Luftporen | schlecht |
| Fugenmörtel +1,5% Dioctylether (Erfindung) | Gut, gleichmäßig | gut-befriedigend |

| | Staubzahl nach 0d | Staubzahl nach 28d |
|---|---|---|
| Selbstverlaufende Spachtelmasse (Vergleich) | 100 | 200 |
| Selbstverlaufende Spachtelmasse +3,0 % Ölsäure (Vergleich) | 75 | 100 |
| Selbstverlaufende Spachtelmasse +1,5 % Dioctylether (Erfindung) | 45 | 70 |

Die Druckfestigkeiten wurden in Anlehnung an DIN EN 13892-2 ermittelt.

| Druckfestigkeit nach 7 d | Druckfestigkeit nach 28d | |
|---|---|---|
| Selbstverlaufende Spachtelmasse (Vergleich) | 19 N/mm² | 32 N/mm² |
| Selbstverlaufende Spachtelmasse +3,0 % Ölsäure (Vergleich) | 9 N/mm² | 13 N/mm² |
| Selbstverlaufende Spachtelmasse +1,5 % Dioctylether (Erfindung) | 20 N/mm² | 29 N/mm² |

| | Haftzugfestigkeiten analog DIN EN 1348 28dRT |
|---|---|
| Fliesenkleber 1 (Vergleich) | 1,7 N/mm² |
| Fliesenkleber 1 +3% PEG 400 (Vergleich) | 0,7 N/mm² |
| Fliesenkleber 1 +1,5% Dioctylether (Erfindung) | 1,5 N/mm² |

## Patentansprüche

1. Pulverförmige Baustoffzusammensetzung, enthaltend mindestens einen Dialkylether mit 8 bis 50 Kohlenstoffatomen.

2. Baustoffzusammensetzung nach Anspruch 1, **dadurch gekennzeichnet, dass** es sich bei den Alkylresten des Dialkylethers um lineare und/oder verzweigte und/oder cyclische gesättigte und/oder ungesättigte Reste handelt.

3. Baustoffzusammensetzung nach einem der Ansprüche 1 oder 2, **dadurch gekennzeichnet, dass** die Dialkylether eine kinematische Viskosität bei 20°C von 0,1 bis 30 mm²/s aufweisen.

4. Baustoffzusammensetzung nach einem der Ansprüche 1 bis 3, **dadurch gekennzeichnet, dass** es sich bei den Dialkylethern um Dibutylether, Dipentylether, Di-hexylether, Diheptylether, Dioctylether, Dinonylether, Didecylether, Diundecylether und/oder Didodecylether handelt

5. Baustoffzusammensetzung nach einem der Ansprüche 1 bis 4, **dadurch gekennzeichnet, dass** diese einen durch Laserdiffraktometrie bestimmten Korngrößenanteil von mindestens 2 Gew.% ≤ 68 µm und mindestens 10 Gew.% ≤ 200 µm aufweist.

6. Baustoffzusammensetzung nach einem der Ansprüche 1 bis 5, **dadurch gekennzeichnet, dass** diese pulverförmige Polymere und insbesondere redispergierbare Polymerpulver enthält.

7. Baustoffzusammensetzung nach Anspruch 6, **dadurch gekennzeichnet, dass** die redispergierbaren Polymerpulver aufgebaut sind aus mindestens einem Vertreter der Reihe Vinylacetat, Styrol, Butadien, Ethylen, Versatinsäure-Vinylester, Harnstoff-Formaldehyd-Kondensationsprodukte und Melamin-Formaldehyd-Kondensationsprodukte.

8. Baustoffzusammensetzung nach einem der Ansprüche 1 bis 7, **dadurch gekennzeichnet, dass** diese einen Anteil an Dialkylether von 0,01 bis 8 Gew.-% aufweist.

9. Baustoffzusammensetzung nach einem der Ansprüche 1 bis 8, **dadurch gekennzeichnet, dass** diese zusätzlich mindestens einen Vertreter der Reihe Bindemittel, Füllstoffe, Verdicker, Wasserretentionsmittel, Dispergiermittel, Rheologieverbesserer, Entschäumer, Verzögerer, Beschleuniger, Zusatzstoffe, Pigmente, organische oder anorganische Fasern enthält.

10. Baustoffzusammensetzung nach einem der Ansprüche 1 bis 9, **dadurch gekennzeichnet, dass** diese einen Anteil an hydraulischem Bindemittel im Bereich von 5 bis 80 Gew.-% aufweist.

11. Baustoffzusammensetzung nach Ansprüchen 1 bis 10, **dadurch gekennzeichnet, dass** diese 15 bis 75 Gew.-% Füllstoffe, 1 bis 5 Gew.-% Dispersionspulver, 0,1 bis 5 Gew.-% Wasserretentionsmittel, 0,1 bis 3 Gew.-% Verdicker, 0,1 bis 3 Gew.-% Zementbeschleuniger und 0,1 bis 3 Gew.-% Zementverzögerer enthält.

12. Verwendung mindestens eines Dialkylethers mit 8 bis 50 Kohlenstoffatomen als Additiv in pulverförmigen Baustoffzusammensetzungen zur Verminderung des Staubens.

13. Verfahren zur Herstellung einer pulverförmigen Baustoffzusammensetzung, **dadurch gekennzeichnet, dass** man die pulverförmige Baustoffzusammensetzung mit mindestens einem Dialkylether als Entstaubungsadditiv entsprechend einem der vorangehenden Ansprüche in Kontakt bringt, insbesondere durch Aufsprühen.

## Claims

1. Pulverulent building material composition containing at least one dialkyl ether having 8 to 50 carbon atoms.

2. Building material composition according to Claim 1, **characterized in that** the alkyl radicals of the dialkyl ether are linear and/or branched and/or cyclic saturated and/or unsaturated radicals.

3. Building material composition according to either of Claims 1 and 2, **characterized in that** the dialkyl ethers have a kinematic viscosity of 0.1 to 30 mm2/s at 20°C.

4. Building material composition according to any of Claims 1 to 3, **characterized in that** the dialkyl ethers are dibutyl ether, dipentyl ether, dihexyl ether, diheptyl ether, dioctyl ether, dinonyl ether, didecyl ether, diundecyl ether and/or didodecyl ether.

5. Building material composition according to any of Claims 1 to 4, **characterized in that** it has a particle size fraction, determined by laser diffractometry, of at least 2% by weight ≤ 68 µm and at least 10% by weight ≤ 200 µm.

6. Building material composition according to any of Claims 1 to 5, **characterized in that** it contains pulverulent polymers and in particular redispersible polymer powders.

7. Building material composition according to Claim 6, **characterized in that** the redispersible polymer powders are composed of at least one member of the series consisting of vinyl acetate, styrene, butadiene, ethylene, vinyl versatate, urea-formaldehyde condensates and melamine-formaldehyde condensates.

8. Building material composition according to any of Claims 1 to 7, **characterized in that** it has a proportion of 0.01 to 8% by weight of dialkyl ether.

9. Building material composition according to any of Claims 1 to 8, **characterized in that** it additionally contains at least one member of the series consisting of binders, fillers, thickeners, water retention agents, dispersants, rheology improvers, antifoams, retardants, accelerators, additives, pigments, organic or inorganic fibres.

10. Building material composition according to any of Claims 1 to 9, **characterized in that** it has a proportion in the range from 5 to 80% by weight of hydraulic binder.

11. Building material composition according to Claims 1 to 10, **characterized in that** it contains 15 to 75% by weight of fillers, 1 to 5% by weight of dispersion powders, 0.1 to 5% by weight of water retention agents, 0.1 to 3% by weight of thickeners, 0.1 to 3% by weight of cement accelerators and 0.1 to 3% by weight of cement retardants.

12. Use of at least one dialkyl ether having 8 to 50 carbon atoms as an additive in pulverulent building material compositions for reducing dust.

13. Process for the preparation of a pulverulent building material composition, **characterized in that** the pulverulent building material composition is brought into contact with at least one dialkyl ether as a dedusting additive according to any of the preceding claims, in particular by spraying on.

## Revendications

1. Composition de matériau de construction sous forme de poudre, contenant au moins un dialkyléther comprenant 8 à 50 atomes de carbone.

2. Composition de matériau de construction selon la revendication 1, **caractérisée en ce qu'**il s'agit, pour les radicaux alkyle du dialkyléther, de radicaux linéaires et/ou ramifiés et/ou cycliques, saturés et/ou insaturés.

3. Composition de matériau de construction selon l'une quelconque des revendications 1 ou 2, **caractérisée en ce que** les dialkyléthers présentent une viscosité cinématique, à 20°C, de 0,1 à 30 mm²/s.

4. Composition de matériau de construction selon l'une quelconque des revendications 1 à 3, **caractérisée en ce qu'**il s'agit, pour les dialkyléthers, de dibutyléther, de dipentyléther, de dihexyléther, de diheptyléther, de dioctyléther, de dinonyléther, de didécyléther, de di-undécyléther et/ou de didodécyléther.

5. Composition de matériau de construction selon l'une quelconque des revendications 1 à 4, **caractérisée en ce qu'**elle présente une proportion de fraction granulométrique, déterminée par diffractométrie au laser, d'au moins 2% en poids ≤ 68 µm et d'au moins 10% en poids ≤ 200 µm.

6. Composition de matériau de construction selon l'une quelconque des revendications 1 à 5, **caractérisée en ce qu'**elle contient des polymères sous forme de poudre et en particulier des poudres polymères redispersibles.

7. Composition de matériau de construction selon la revendication 6, **caractérisée en ce que** les poudres polymères redispersibles sont formées par au moins un représentant de la série acétate de vinyle, styrène, butadiène, éthylène, ester vinylique de l'acide versatique, produits de condensation d'urée-formaldéhyde et produits de condensation de mélamine-formaldéhyde.

8. Composition de matériau de construction selon l'une quelconque des revendications 1 à 7, **caractérisée en ce qu'**elle présente une proportion de dialkyléthers de 0,01 à 8% en poids.

9. Composition de matériau de construction selon l'une quelconque des revendications 1 à 8, **caractérisée en ce qu'**elle contient en outre au moins un représentant de la série agents liants, charges, épaississants, agents de rétention d'eau, dispersants, agents d'amélioration de la rhéologie, antimousses, retardateurs, accélérateurs, additifs, pigments, fibres organiques ou inorganiques.

10. Composition de matériau de construction selon l'une quelconque des revendications 1 à 9, **caractérisée en ce qu'**elle contient une proportion d'agents liants hydrauliques dans la plage de 5 à 80% en poids.

11. Composition de matériaux de construction selon les revendications 1 à 10, **caractérisée en ce qu'**elle contient 15 à 75% en poids de charges, 1 à 5% en poids de poudres de dispersion, 0,1 à 5% en poids d'agents de rétention d'eau, 0,1 à 3% en poids d'épaississants, 0,1 à 3% en poids d'accélérateurs de ciment et 0,1 à 3% en poids de retardateurs de ciment.

12. Utilisation d'au moins un dialkyléther comprenant 8 à 50 atomes de carbone comme additif dans des compositions de matériau de construction sous forme de poudre pour diminuer la formation de poussières.

13. Procédé pour la préparation d'une composition de matériau de construction sous forme de poudre, **caractérisé en ce qu'**on met en contact la composition de matériau de construction sous forme de poudre avec au moins un dialkyléther, en tant qu'additif d'élimination de poussière, selon l'une quelconque des revendications précédentes, en particulier par pulvérisation.
